(19) Europäisches Patentamt
European Patent Office
Office européen des brevets

(11) **EP 1 680 371 B1**

(12) **FASCICULE DE BREVET EUROPEEN**

(45) Date de publication et mention
de la délivrance du brevet:
**19.09.2012 Bulletin 2012/38**

(21) Numéro de dépôt: **04766477.6**

(22) Date de dépôt: **11.08.2004**

(51) Int Cl.:
*C03C 3/087* *(2006.01)*    *C03C 4/02* *(2006.01)*

(86) Numéro de dépôt international:
**PCT/EP2004/051774**

(87) Numéro de publication internationale:
**WO 2005/016840 (24.02.2005 Gazette 2005/08)**

(54) **VERRE A FAIBLE TRANSMISSION LUMINEUSE**

GLAS MIT SCHLECHTER LICHTDURCHLÄSSIGKEIT

GLASS WITH POOR LIGHT TRANSMISSION

(84) Etats contractants désignés:
**AT BE BG CH CY CZ DE DK EE ES FI FR GB GR HU IE IT LI LU MC NL PL PT RO SE SI SK TR**

(30) Priorité: **13.08.2003 BE 200300446**

(43) Date de publication de la demande:
**19.07.2006 Bulletin 2006/29**

(73) Titulaire: **AGC Glass Europe**
**1170 Bruxelles (Watermael-Boitsfort) (BE)**

(72) Inventeurs:
• **DELMOTTE, Laurent,**
**Glaverbel - Centre R & D**
**B-6040 Jumet (BE)**
• **DIEU, Véronique,**
**Glaverbel - Centre R & D**
**B-6040 Jumet (BE)**
• **VAN DEN NESTE, Marc,**
**Glaverbel - Centre R & D**
**B-6040 Jumet (BE)**

(74) Mandataire: **Verbrugge, Vivien François Emeric et al**
**AGC Glass Europe**
**Intellectual Property Department**
**R&D Centre**
**Rue de l'Aurore, 2**
**6040 Jumet (BE)**

(56) Documents cités:
**US-A- 5 877 103**

• **PATENT ABSTRACTS OF JAPAN vol. 2000, no. 11, 3 janvier 2001 (2001-01-03) & JP 2000 219534 A (CENTRAL GLASS CO LTD), 8 août 2000 (2000-08-08)**

**Description**

L'invention est relative à des compositions de verres de type silico-sodo-calcique à faible transmission lumineuse, typiquement des transmissions qui pour une feuille de 4mm d'épaisseur ne sont pas supérieures à 20%.

L'expression "verre sodo-calcique" est utilisée ici dans le sens large et concerne tout verre qui contient les constituants suivants (pourcentages en poids):

| | |
|---|---|
| $SiO_2$ | 66 à 75% |
| $Na_2O$ | 10 à 20% |
| CaO | 5 à 15% |
| MgO | 0 à 5% |
| $Al_2O_3$ | 0 à 5% |
| $K_2O$ | 0 à 5% |

Ce type de verre trouve un très large usage dans le domaine des vitrages pour le bâtiment ou l'automobile, par exemple. On le fabrique couramment sous forme de ruban par le procédé de flottage. Un tel ruban peut être découpé en feuilles qui peuvent ensuite être bombées ou subir un traitement de renforcement de leurs propriétés mécaniques, par exemple une trempe thermique.

Il est en général nécessaire de rapporter les propriétés optiques d'une feuille de verre à un illuminant standard. Dans la présente description, on utilise 2 illuminants standards, l'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est essentiellement destiné à évaluer les propriétés optiques des vitrages destinés à l'automobile. La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme tri-chromatique C.I.E. 1931. Ce diagramme tri-chromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondant à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

Les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P et de la longueur d'onde dominante $\lambda_D$ de la lumière transmise, sont calculées à partir des transmissions spécifiques internes spectrales ($TSI_\lambda$) d'une feuille de verre de 5 mm d'épaisseur. La transmission spécifique interne spectrale d'une feuille de verre est régie uniquement par l'absorption du verre et peut être exprimée par la loi de Beer-Lambert:

$TSI_\lambda = e^{-E.A\lambda}$ où $A_\lambda$, est le coefficient d'absorption du verre (en $cm^{-1}$) à la longueur d'onde considérée et E l'épaisseur du verre (en cm). En première approximation, $TSI_\lambda$ peut également être représenté par la formule

$$(I_3 + R_2) / (I_1 - R_1)$$

où $I_1$ est l'intensité de la lumière visible incidente à une première face de la feuille de verre, $R_1$ est l'intensité de la lumière visible réfléchie par cette face, $I_3$ est l'intensité de la lumière visible transmise à partir de la seconde face de la feuille de verre et $R_2$ est l'intensité de la lumière visible réfléchie vers l'intérieur de la feuille par cette seconde face.

Dans la description qui suit ainsi que dans les revendications, on utilise encore:

- la transmission lumineuse totale pour l'illuminant A (TLA), mesurée pour une épaisseur de 4 mm (TLA4). Cette transmission totale est le résultat de l'intégration entre les longueurs d'onde de 380 et 780 nm de l'expression: $\Sigma$ $T_\lambda.E_\lambda.S_\lambda$ / $\Sigma E_\lambda.S_\lambda$ dans laquelle $T_\lambda$ est la transmission à la longueur d'onde $\lambda$, $E_\lambda$ est la distribution spectrale de l'illuminant A et $S_\lambda$, est la sensibilité de l'oeil humain normal en fonction de la longueur d'onde $\lambda$.
- la transmission énergétique totale (TE), mesurée pour une épaisseur de 4 mm (TE4). Cette transmission totale est le résultat de l'intégration entre les longueurs d'onde 300 et 2500 nm de l'expression: $\Sigma T_\lambda.E_\lambda$ / $\Sigma E_\lambda$ dans laquelle $E_\lambda$ est la distribution énergétique spectrale du soleil à 30° au-dessus de l'horizon.
- la sélectivité (SE), mesurée par le rapport de la transmission lumineuse totale pour l'illuminant A et de la transmission énergétique totale (TLA/TE).

Les vitrages présentant une forte absorption lumineuse correspondent à une demande aussi bien pour les bâtiments que pour les applications dans le domaine automobile. En plus de la faible transmission lumineuse, le plus souvent il est demandé une très faible transmission énergétique.

Le choix des compositions comporte encore des caractéristiques liées à la couleur en transmission et en réflexion. La demande pour les verres très absorbants, est en particulier pour des feuilles offrant une bonne neutralité. Celle-ci est caractérisée par le degré de pureté de coloration. Une bonne neutralité de coloration correspond ainsi à une pureté qui est bien inférieure à 10.

La formation des verres répondant à un ensemble de conditions du type de celles indiquées ci-dessus, nécessite un choix de matériaux colorants particulièrement délicat, d'autant qu'aux performances des vitrages formés avec ces compositions s'ajoutent des conditions sur le choix des matériaux utilisables compte tenu notamment des exigences propres aux techniques de fabrication. Ainsi les matériaux colorants dont le rôle est d'absorber les infrarouges s'opposent à l'uniformisation des températures dans les bassins des fours de fusion, lesquels sont principalement chauffés par le dessus et par rayonnement. US 5 877 103 décrit des verres gris comprenant 40-180 ppm de CoO, 3-40 ppm de Se, 10-100 ppm de $Cr_2O_3$ et 1,05-1,80% $Fe_2O_3$.

L'objet de l'invention est obtenu par une composition verrière de type silico-sodo-calcique comprenant des éléments colorants dans les proportions pondérales suivantes :

| | |
|---|---|
| $Fe_2O_3$ | 1,1 à 1,5% (fer total dans la composition) |
| Co | 150 à 200 ppm |
| $Cr_2O_3$ | 25 à 100 ppm |
| Se | 10 à 50 ppm |
| MnO | moins de 600 ppm |
| $TiO_2$ | moins de 0,1% |

les constituants de la composition, et particulièrement les éléments colorés étant choisis en proportions telles, que la transmission lumineuse sous une épaisseur de 4mm, TLA4, soit inférieure à 20% et la transmission énergétique, TE4 (Moon), soit également inférieure à 20%.

En plus des constituants principaux énumérés précédemment, les compositions selon l'invention peuvent inclure tout d'abord des constituants sous forme usuelle d'impuretés dans les proportions qui sont traditionnellement observées, et qui proviennent en particulier des matières premières mises en oeuvre. Ces impuretés inévitables ont cependant une influence très limitée sur l'établissement des propriétés des verres concernés.

Les compositions selon l'invention peuvent encore comprendre le cas échéant des agents colorants supplémentaires usuels dans les verres tels que $CeO_2$, $TiO_2$, $V_2O_5$, NiO...

Si chacun des constituants de la composition selon l'invention, est en soi connu pour le type de propriétés qu'il peut induire, et, le cas échéant, les inconvénients qui s'attachent à son utilisation, la complexité des systèmes envisagés tient au nombre des constituants et aux multiples compromis nécessaires pour parvenir au meilleur résultat recherché.

Ainsi le fer ferrique est l'un des principaux acteurs permettant de réduire la transmission lumineuse. Une forte teneur en fer ferrique conduit à une coloration en transmission dans les couleurs jaune brunâtre. Cette coloration pour revenir à une nuance plus neutre, doit être compensée au moyen des autres constituants colorants de la composition.

Le fer ferreux est un élément important. Il confère à la composition une part significative de son pouvoir absorbant du rayonnement infrarouge. Si les ions $Fe^{3+}$ conduisent à une légère absorption de la lumière visible de faible longueur d'onde (410 et 440nm), la présence de $Fe^{2+}$ confère au verre une forte absorption pour une bande de longueur d'onde centrée à 1050nm. Pour cette raison les ions $Fe^{2+}$ sont ceux qui commandent la transmission énergétique des verres. L'augmentation de la concentration en fer ferreux s'accompagne d'une diminution de la TE et d'une augmentation de la sélectivité des verres.

Le fer total dans la composition n'est pas supérieur à 1,5% en poids, et, de préférence, n'est pas supérieur à 1,35%. De même si la teneur n'est pas inférieure à 1,1% en poids, elle est de préférence au moins égale à 1,2%.

Compte tenu des effets respectifs du fer ferreux et du fer ferrique le ratio fer ferreux sur fer total exprimé en fer ferrique, qui caractérise l'état redox de la composition, s'établit selon l'invention de préférence à une valeur :

$$0,20 < F^{2+}/\text{Fe total} < 0,26$$

et de façon avantageuse à:

$$0,21 < F^{2+}/\text{Fe total} < 0,25$$

En dehors du fer, les effets des différents autres agents colorants envisagés individuellement, pour l'élaboration d'un verre sont les suivants (selon "Le Verre" de H. Scholze - traduit par J. Le Dû - Institut du Verre - Paris):

Cobalt: Le groupe $Co^{II}O_4$ produit une coloration bleue intense, avec une longueur d'onde dominante quasi opposée à celle donnée par le chromophore fer-sélénium.

Chrome: La présence du groupe $Cr^{III}O_6$ donne naissance à des bandes d'absorption à 650 nm et donne une couleur vert clair. Une oxydation plus poussée donne naissance au groupe $Cr^{VI}O_4$ qui provoque une bande d'absorption très intense à 365 nm et donne une coloration jaune.

Sélénium: Le cation $Se^{4+}$ n'a pratiquement pas d'effet colorant, tandis que l'élément non chargé $Se^0$ donne une coloration rose. L'anion $Se^{2-}$ forme un chromophore avec les ions ferriques présents et confère de ce fait une couleur brun-rouge au verre.

Manganèse: Il apparaît dans le verre sous forme de $Mn^{II}O_6$ pratiquement incolore. Les verres riches en alcalin présentent toutefois une couleur violette à cause du groupe $Mn^{III}O_6$.

Titane: Le $TiO_2$ dans les verres leur donne une coloration jaune. Pour de grandes quantités on peut même obtenir par réduction le groupe $Ti^{III}O_6$ qui colore en violet, voire en marron.

Les propriétés énergétiques et optiques d'un verre contenant plusieurs agents colorants résultent donc d'une interaction complexe entre ceux-ci. En effet, ces agents colorants ont un comportement qui dépend fortement de leur état rédox et donc de la présence d'autres éléments susceptibles d'influencer cet état.

D'autres considérations que celles concernant les propriétés colorantes de ces éléments interviennent encore dans le choix des compositions selon l'invention. Par exemple l'utilisation du sélénium dans les compositions selon l'invention est de préférence relativement faible. L'introduction de sélénium dans la composition est difficile en raison de sa très forte volatilité. Par ailleurs la réglementation en matière de rejet dans l'atmosphère étant de plus en plus contraignante, pour éviter de devoir procéder à une élimination coûteuse du sélénium présent dans les fumées, il est préférable de maintenir sa teneur aussi faible que possible dans ces fumées et par suite dans les compositions elles-mêmes.

Le sélénium n'est pas dans la composition dans des teneurs supérieures à 50ppm. De préférence cette teneur est inférieure ou égale à 40ppm et peut être aussi faible que 20ppm ou même 10ppm.

Le MnO lorsqu'il est présent dans la composition, n'est pas en teneur supérieure à 600ppm. La teneur en chrome qui est au plus égale à 100ppm est de préférence inférieure ou égale à 80ppm, et peut être aussi faible que 25ppm.

La teneur en cobalt des compositions selon l'invention est comprise entre 150 et 200pppm. Elle est de préférence comprise entre 160 et 190ppm.

En ajustant au mieux les proportions des différents constituants la pureté d'excitation, P, des compositions colorées selon l'invention, autrement dit la neutralité de la couleur, qui est toujours inférieure à 10, est avantageusement égale ou inférieure à 5. Elle est de façon particulièrement préférée pour certaines compositions, inférieure ou égale à 4.

La transmission lumineuse TLA4, inférieure à 20% peut être amenée à des valeurs sensiblement plus basses, notamment inférieure à 19%. Dans le cadre de l'invention, pour les usages considérés, qu'il s'agisse de vitrage « automobile », ou de vitrage « bâtiment », la TLA4 n'est pas de préférence inférieure à 14%.

La transmission énergétique des verres selon l'invention est avantageusement maintenue aussi faible que possible. Si elle est toujours égale ou inférieure à 20%, elle est avantageusement telle que la sélectivité (rapport TL/TE)

# EP 1 680 371 B1

soit égale ou supérieure à 1.

Les verres selon la présente invention peuvent être fabriqués par des procédés traditionnels. En tant que matières premières, on peut utiliser des matières naturelles, du verre recyclé, des scories ou une combinaison de ces matières. Les colorants ne sont pas nécessairement ajoutés dans la forme indiquée, mais cette manière de donner les quantités d'agents colorants ajoutées, en équivalents dans les formes indiquées, répond à la pratique courante. En pratique, le fer est ajouté sous forme de potée, le cobalt est ajouté sous forme de sulfate hydraté, tel que $CoSO_4.7H_2O$ ou $CoSO_4.6H_2O$, le chrome est ajouté sous forme de bichromate tel que $K_2Cr_2O_7$, ou sous forme de chromite tel que $(Mg,Fe^{2+})O(Cr,Al,Fe^{3+})_2O_3$ Le cérium est introduit sous forme d'oxyde ou de carbonate. Quant au vanadium, on l'introduit sous forme d'oxyde ou de vanadate de sodium. Le sélénium, lorsqu'il est présent, est ajouté sous forme élémentaire ou sous forme de sélénite tel que $Na_2SeO_3$ ou $ZnSeO_3$.

D'autres éléments sont parfois présents en tant qu'impuretés dans les matières premières utilisées pour fabriquer le verre selon l'invention que ce soit dans les matières naturelles, dans le verre recyclé ou dans les scories, mais lorsque ces impuretés ne confèrent pas au verre des propriétés se situant hors des limites définies ci-dessus, ces verres sont considérés comme conformes à la présente invention.

La présente invention sera illustrée par les exemples spécifiques de propriétés optiques et de compositions qui suivent.

| | 1 | 2 | 3 | 4 | 5 | 6 | 7 | 8 | 9 | * 10 |
|---|---|---|---|---|---|---|---|---|---|---|
| Fe2O3 (%) | 1,1 | 1,15 | 1,232 | 1,238 | 1,273 | 1,273 | 1,285 | 1,29 | 1,296 | 1,31 |
| Co (ppm) | 175 | 185 | 181 | 178 | 184 | 184 | 176 | 195 | 185 | 150 |
| Cr2O3 (ppm) | 100 | 25 | 31 | 62 | 40 | 52 | 65 | 60 | 42 | 30 |
| Se (ppm | 30 | 35 | 47 | 36 | 40 | 35 | 31 | 43 | 47 | 30 |
| FeO (%) | 0,248 | 0,259 | 0,212 | 0,261 | 0,286 | 0,268 | 0,280 | 0,290 | 0,222 | 0,295 |
| Fe2+/FeTot (%) | 25 | 25 | 19,1 | 23,4 | 25 | 23,4 | 24,2 | 25 | 19 | 25 |
| | | | | | | | | | | |
| x | 0,298 | 0,302 | 0,316 | 0,310 | 0,312 | 0,305 | 0,303 | 0,313 | 0,304 | 0,310 |
| y | 0,313 | 0,313 | 0,326 | 0,325 | 0,326 | 0,321 | 0,321 | 0,327 | 0,316 | 0,328 |
| TLA 4mm (%) | 19,00 | 17,60 | 17,60 | 17,70 | 14,96 | 16,80 | 17,40 | 12,81 | 17,00 | 20,00 |
| TE 4mm (%) | 18,90 | 17,85 | 19,90 | 17,30 | 15,04 | 16,60 | 16,60 | 13,84 | 19,30 | 16,90 |
| LOD (nm) | 487,8 | 485,5 | 570,0 | 547,1 | 561,1 | 504,6 | 498,4 | 563,5 | 489,8 | 550,8 |
| P (%) | 4,8 | 3,3 | 4,1 | 2,1 | 3,2 | 1,6 | 2,4 | 3,8 | 2,3 | 3,3 |
| | 11 | 12 | 13 | 14 | 15 | 16 | * 17 | 18 | 19 | |
| Fe2O3 (%) | 1,35 | 1,35 | 1,35 | 1,35 | 1,35 | 1,35 | 1,35 | 1,35 | 1,35 | |
| Co (ppm) | 200 | 200 | 200 | 165 | 180 | 150 | 155 | 200 | 200 | |
| Cr2O3 (ppm) | 25 | 25 | 25 | 30 | 50 | 80 | 100 | 100 | 100 | |
| Se (ppm) | 35 | 35 | 35 | 25 | 35 | 30 | 21 | 35 | 35 | |
| FeO (%) | 0,292 | 0,255 | 0,304 | 0,304 | 0,27945 | 0,304 | 0,304 | 0,255 | 0,304 | |
| Fe2+/FeTot (%) | 24 | 21 | 25 | 25 | 23 | 25 | 25 | 21 | 25 | |
| | | | | | | | | | | |
| x | 0,302 | 0,306 | 0,300 | 0,298 | 0,310 | 0,311 | 0,296 | 0,306 | 0,301 | |
| y | 0,316 | 0,319 | 0,315 | 0,317 | 0,327 | 0,333 | 0,320 | 0,324 | 0,319 | |
| TLA 4mm (%) | 14,32 | 15,18 | 14,04 | 19,32 | 16,00 | 18,70 | 20,00 | 14,01 | 12,87 | |
| TE 4mm (%) | 14,82 | 16,98 | 14,10 | 16,42 | 15,89 | 15,70 | 16,60 | 16,25 | 13,36 | |
| LOD (nm) | 490,5 | 500,0 | 489,0 | 491,7 | 552,5 | 554,3 | 494,5 | 519,0 | 495,1 | |

(suite)

|  | 11 | 12 | 13 | 14 | 15 | 16 | * 17 | 18 | 19 |  |
|---|---|---|---|---|---|---|---|---|---|---|
| P (%) | 3,2 | 1,5 | 3,8 | 4,5 | 3,1 | 4,9 | 5,0 | 1,5 | 3,2 |  |
| * pas un mode de réalisation de l'invention. | | | | | | | | | | |

**Revendications**

**1.** Composition verrière de type silico-sodo-calcique dont les composants de base traditionnels sont dans les proportions pondérales :

$SiO_2$ 66 à 75%
$Na_2O$ 10 à 20%
CaO 5 à 15%
MgO 0 à 5%
$Al_2O_3$ 0 à 5%
$K_2O$ 0 à 5%

à ces éléments de base s'ajoutent les éléments colorants qui sont présents dans les proportions pondérales suivantes :

$Fe_2O_3$ 1,1 à 1,5% (fer total dans la composition)
Co 150 à 200 ppm
$Cr_2O_3$ 25 à 100 ppm
Se 10 à 50 ppm
MnO moins de 600 ppm
$TiO_2$ moins de 0,1%

les constituants de la composition, et particulièrement les éléments colorés, étant choisis en proportions telles que la transmission lumineuse sous une épaisseur de 4mm, TLA4, soit inférieure à 20%, la transmission énergétique TE4 (Moon) est inférieure à 20%.

**2.** Composition verrière selon la revendication 1 dans laquelle la teneur pondérale de $Cr_2O_3$ est au plus égale à 80ppm.

**3.** Composition verrière selon la revendication 1 ou la revendication 2 dans laquelle la teneur en cobalt est comprise entre 160 et 190ppm.

**4.** Composition verrière selon l'une des revendications précédentes dans laquelle la teneur en sélénium est au plus égale à 40ppm.

**5.** Composition verrière selon l'une des revendications précédentes dans laquelle le rapport fer ferreux/fer total, représentant le degré d'oxydation de la composition est tel que :

$$0,20 < Fe^{2+}/Fe \; total < 0,26$$

**6.** Composition verrière selon l'une des revendications précédentes dans laquelle la teneur pondérale en fer total est au plus égale à 1,35%.

**7.** Composition selon l'une des revendications précédentes dans laquelle le rapport fer ferreux/fer total est tel que :

$$0,21 < Fe^{2+}/Fe \; total < 0,25$$

**8.** Composition verrière selon l'une des revendications précédentes dans laquelle la teneur en fer total est au moins de 1,2%.

**9.** Composition verrière selon l'une des revendications précédentes dont les éléments colorants sont choisis de telle sorte que le degré de pureté d'excitation des couleurs soit au plus égal à 5.

**10.** Composition selon l'une des revendications précédentes dans laquelle les éléments colorants sont choisis en proportions telles que la transmission lumineuse sous une épaisseur de 4mm, TLA4, est au plus égale à 19%.

**11.** Composition selon l'une des revendications précédentes dans laquelle les éléments colorants sont choisis en proportions telles que la sélectivité TL/TE>1

**Claims**

**1.** Composition for soda-lime-silica glass, in which the traditional base components are given in proportions by weight:

| | |
|---|---|
| $SiO_2$ | 66 to 75% |
| $Na_2O$ | 10 to 20% |
| $CaO$ | 5 to 15% |
| $MgO$ | 0 to 5% |
| $Al_2O_3$ | 0 to 5% |
| $K_2O$ | 0 to 5% |

colouring agents present in the following proportions by weight being added to these base elements:

| | |
|---|---|
| $Fe_2O_3$ | 1.1 to 1.5% (total iron in the composition) |
| $Co$ | 150 to 200 ppm |
| $Cr_2O_3$ | 25 to 100 ppm |
| $Se$ | 10 to 50 ppm |
| $MnO$ | less than 600 ppm |
| $TiO_2$ | less than 0.1 % |

wherein the constituents of the composition, and in particular the coloured elements, are chosen in such proportions that the light transmission with a thickness of 4 mm, LTA4, is lower than 20% and the energy transmission ET4 (Moon) is lower than 20%.

**2.** Glass composition according to claim 1, in which the content by weight of $Cr_2O_3$ is at most equal to 80 ppm.

**3.** Glass composition according to claim 1 or claim 2, in which the cobalt content lies in the range of 160 to 190 ppm.

**4.** Glass composition according to one of the preceding claims, in which the selenium content is at most equal to 40 ppm.

**5.** Glass composition according to one of the preceding claims, in which the ratio of ferrous iron/total iron that represents the degree of oxidation of the composition is such that:

$$0.20 < Fe^{2+} / \text{total Fe} < 0.26.$$

**6.** Glass composition according to one of the preceding claims, in which the content by weight of total iron is at most equal to 1.35%.

**7.** Glass composition according to one of the preceding claims, in which the ratio of ferrous iron/total iron is such that:

$$0.21 < Fe^{2+} / total\ Fe < 0.25.$$

8. Glass composition according to one of the preceding claims, in which the content of total iron is at least 1.2%.

9. Glass composition according to one of the preceding claims, the colouring elements of which are chosen such that the excitation purity of the colours is at most equal to 5.

10. Composition according to one of the preceding claims, in which the colouring elements are chosen in such proportions that the light transmission with a thickness of 4 mm, LTA4, is at most equal to 19%.

11. Composition according to one of the preceding claims, in which the colouring elements are chosen in such proportions that the selectivity is LT/ET>1.

**Patentansprüche**

1. Glaswand- bzw. Glasdachzusammensetzung vom Natriumkalziumsilikat-Typ, wobei die herkömmlichen Grundkomponenten in den Gewichtsanteilen vorliegen:

| | |
|---|---|
| $SiO_2$ | 66 bis 75 % |
| $Na_2O$ | 10 bis 20 % |
| CaO | 5 bis 15 % |
| MgO | 0 bis 5 % |
| $Al_2O_3$ | 0 bis 5 % |
| $K_2O$ | 0 bis 5 % |

wobei zu diesen Grundelementen Färbemittel hinzukommen, die in den folgenden Gewichtsanteilen vorliegen:

| | |
|---|---|
| $Fe_2O_3$ | 1,1 bis 1,5% (Eisen gesamt in der Zusammensetzung) |
| Co | 150 bis 200 ppm |
| $Cr_2O_3$ | 25 bis 100 ppm |
| Se | 10 bis 50 ppm |
| MnO | weniger als 600 ppm |
| $TiO_2$ | weniger als 0,1 % |

wobei die Bestandteile der Zusammensetzung, und insbesondere die Färbemittel in solchen Anteilen ausgesucht sind, dass die Lichtdurchlässigkeit unter einer Stärke von 4 mm, TLA4, geringer als 20 % ist, die Energieübertragung TE4 (Moon) geringer als 20 % ist.

2. Glaswand- bzw. Glasdachzusammensetzung nach Anspruch 1, bei welcher der Gewichtsgehalt von $Cr_2O_3$ höchstens gleich 80 ppm ist.

3. Glaswand- bzw. Glasdachzusammensetzung nach Anspruch 1 oder Anspruch 2, bei welcher der Kobaltgehalt zwischen 160 und 190 ppm liegt.

4. Glaswand- bzw. Glasdachzusammensetzung nach einem der vorhergehenden Ansprüche, bei welcher der Selengehalt höchstens gleich 40 ppm ist.

5. Glaswand- bzw. Glasdachzusammensetzung nach einem der vorhergehenden Ansprüche, bei welcher die Beziehung zweiwertiges Eisen/Eisen gesamt, die den Oxidationsgrad der Zusammensetzung darstellt, so ist, dass:

$$0,20 < Fe2^+/Fe\ gesamt < 0,26$$

6. Glaswand- bzw. Glasdachzusammensetzung nach einem der vorhergehenden Ansprüche, bei welcher der Gewichtsgehalt von Eisen gesamt höchstens gleich 1,35 % ist.

**7.** Glaswand- bzw. Glasdachzusammensetzung nach einem der vorhergehenden Ansprüche, bei welcher die Beziehung zweiwertiges Eisen/Eisen gesamt so ist, dass:

$$0{,}21 < Fe^{2+}/Fe\ gesamt < 0{,}25$$

**8.** Glaswand- bzw. Glasdachzusammensetzung nach einem der vorhergehenden Ansprüche, bei welcher der Gehalt an Eisen gesamt mindestens 1,2 % beträgt.

**9.** Glaswand- bzw. Glasdachzusammensetzung nach einem der vorhergehenden Ansprüche, wobei die Färbemittel so ausgewählt sind, dass der Anregungsreinheitsgrad der Farben höchstens gleich 5 ist.

**10.** Glaswand- bzw. Glasdachzusammensetzung nach einem der vorhergehenden Ansprüche, bei welcher die Färbemittel in solchen Anteilen ausgewählt sind, dass die Lichtdurchlässigkeit unter einer Stärke von 4 mm, TLA4, höchstens gleich 19 % ist.

**11.** Glaswand- bzw. Glasdachzusammensetzung nach einem der vorhergehenden Ansprüche, bei welcher die Färbemittel in solchen Anteilen ausgewählt sind, dass die Selektivität TL/TE>1 ist.

**EP 1 680 371 B1**

**RÉFÉRENCES CITÉES DANS LA DESCRIPTION**

**Documents brevets cités dans la description**

- US 5877103 A